Europäisches Patentamt

European Patent Office

Office européen des brevets

(11) Numéro de publication: **0 375 508**

**A1**

# DEMANDE DE BREVET EUROPEEN

(21) Numéro de dépôt: 89403442.0

(22) Date de dépôt: 12.12.89

(51) Int. Cl.5 **H01G 1/147, H01G 4/24**

(30) Priorité: 20.12.88 FR 8816815

(43) Date de publication de la demande:
27.06.90 Bulletin 90/26

(84) Etats contractants désignés:
**DE FR IT NL**

(71) Demandeur: **COMPAGNIE EUROPEENNE DE COMPOSANTS ELECTRONIQUES LCC**
**50, rue Jean-Pierre Timbaud**
**F-92400 Courbevoie(FR)**

(72) Inventeur: **Pageaud, Michel**
**THOMSON-CSF SCPI Cédex 67**
**F-92045 Paris la Défense(FR)**
Inventeur: **Gillet, Robert**
**THOMSON-CSF SCPI Cédex 67**
**F-92045 Paris la Défense(FR)**

(74) Mandataire: **Guérin, Michel et al**
**THOMSON-CSF SCPI**
**F-92045 PARIS LA DEFENSE CEDEX 67(FR)**

(54) Condensateur en couches pouvant subir un traitement électrique sévère, et procédé de fabrication d'un tel condensateur.

(57) La présente invention concerne la fabrication de condensateurs en couches de type empilé ou bobiné. Ces condensateurs, ayant la forme d'un bloc sont réalisés à partir de films supportant au moins une métallisation (7). Ils comportent deux armatures (8) métalliques placées sur deux faces latérales (4,5) opposées du bloc. Ces armatures (8) sont constituées d'au moins deux plots (40,41), (50,51). Un des plots (40), (50) de chaque armature (8) sert à l'application d'un traitement électrique sévère.

Ces plots (40,41),(50,51) sont obtenus par réalisation d'une entaille (31) dans l'armature (8) ou par masquage lors de la métallisation de l'armature (8).

Application aux condensateurs en couches pouvant subir un traitement électrique sévère sans perte de capacité.

FIG_4

## CONDENSATEUR EN COUCHES POUVANT SUBIR UN TRAITEMENT ELECTRIQUE SEVERE ET PROCEDES DE FABRICATION D'UN TEL CONDENSATEUR.

La présente invention concerne la fabrication de condensateurs en couches. Elle se rapporte plus particulièrement à la fabrication de condensateurs empilés ou bobinés pouvant supporter un traitement électrique sévère sans entraîner une perte de capacité.

La fabrication de condensateurs empilés à partir de films plastiques métallisés est connue. On utilise généralement des films plastiques comportant une zone métallisée et une marge latérale non métallisée. On superpose deux films, leurs marges latérales non métallisées étant sur des côtés opposés, afin d'obtenir une paire de films constituée d'un film de rang pair et d'un film de rang impair. On enroule sur une roue de grand diamètre, au moins une paire de films métallisés suivant un nombre de tours déterminés. On obtient un ruban capacitif comportant des couches de rang pair et impair alternées, appelé condensateur mère. On recouvre ensuite avec un métal, chacune des faces latérales du ruban capacitif afin de réaliser des armatures. Chaque armature permet de relier mécaniquement et électriquement entre elles, les métallisations des couches de même rang. Cette opération est connue sous la dénomination de schoopage. Un découpage du ruban capacitif en blocs permet d'obtenir des condensateurs distincts généralement de forme parallélépipédique. Ils sont constitués d'un empilement de feuilles de rang pair et impair alternées, maintenues entre deux armatures situées sur des faces opposées du bloc.

Des éléments de connexion sont ensuite fixés sur les armatures de chaque condensateur.

Les condensateurs bobinés se fabriquent, eux généralement individuellement. On utilise comme précédemment au moins une paire de films métallisés que l'on bobine sur elle-même. Au bout d'un certain nombre de tours, on obtient un bloc cylindrique. On dépose par schoopage des armatures métalliques sur les deux faces latérales du bloc. Ces faces sont alors circulaires. On fixe ensuite un élement de connexion sur chacune des armatures.

Les films plastiques utilisés sont généralement en polyamide, en polyester... . Leur épaisseur est comprise entre quelques micromètres et quelques dizaines de micromètres. On les métallise par pulvérisation sous vide et le métal utilisé est généralement de l'aluminium. Lors de la métallisation, des défauts peuvent apparaitre sur le film : il peut se percer, des poussières peuvent se coller et.... Pour faire disparaitre ces défauts, il est connu de faire subir aux condensateurs finis un traitement électrique sévère. Il suffit d'appliquer une tension élevée sur les éléments de connexion. Ce traitement attaque en même temps tous les défauts du film par le phénomène connu sous la dénomination d'autocicatrisation. Par ce phénomène, des courants importants sont induits sur chaque défaut, mais ces courants importants traversent aussi les armatures et en particulier la liaison entre une armature et une zone métallisée du film. Lorsque le courant est trop fort, il arrive que la liaison fasse effet de fusible et le condensateur perd alors une partie de sa capacité correspondant à la feuille capacitive touchée par la liaison fondue.

La présente invention vise à remédier à cet inconvénient et permet de traiter électriquement des condensateurs en couches de type empilé ou bobiné, en induisant des courants très importants, qui en temps normal auraient détruits toutes leurs liaisons.

L'invention propose un condensateur en couches, de type empilé ou bobiné ayant la forme d'un bloc, réalisé à partir d'au moins un film supportant au moins une métallisation et comportant deux armatures, d'épaisseur $e$ qui relient électriquement les métallisations caractérisé en ce que chaque armature est constituée d'au moins deux plots, un des plots servant à l'application d'un traitement éléctrique sévère, en vue de l'autocicatrisation du film.

L'invention s'applique particulièrement aux condensateurs en couches, du type empilé ou bobiné, réalisés à partir de film supportant une métallisation et comportant au moins une marge latérale non métallisée. Les marges situées sur deux couches successives sont disposées sur deux faces latérales du condensateur.

Le film utilisé peut comporter une métallisation et une marge latérale sur chaque face, les deux marges d'un même film étant situées sur des côtés opposés.

Les plots servant à appliquer le traitement électrique sévère pourront être en vis-à-vis.

L'invention propose aussi des procédés de réalisation de tels condensateurs. Selon un premier procédé les plots sont obtenus, en réalisant au moins une entaille avec un outil tranchant dans toute l'épaisseur de métal de chacune des armatures. La profondeur de l'entaille est comprise entre l'épaisseur du métal des armatures et la largeur active du condensateur. Cette opération intervient avant de fixer les éléments de connexion. Ce procédé s'emploie aussi bien pour les condensateurs empilés que bobinés.

Selon un autre procédé, les plots sont obtenus lors de la métallisation des armatures. Pour cela on utilise un masque comportant des évidements aux endroits ou l'on désire déposer le métal et des parties pleines aux endroits ne devant pas recevoir de métal. Ce procédé s'emploie de préférence pour les condensateurs bobinés qui sont fabriqués individuellement.

D'autres caractéristiques et avantages de l'invention apparaîtront à la lecture de la description suivante faite à titre d'exemple non limitatif et, illustrée par les figures annexées parmi lesquelles :

- la figure 1 représente un condensateur empilé semi-fini selon l'art connu,
- la figure 2 représente en vue de dessus les détails d'un condensateur empilé selon l'art connu.
- la figure 3 représente un condensateur bobiné semi-fini selon l'art connu,
- la figure 4 représente un condensateur empilé conforme à l'invention, en cours de fabrication.
- la figure 5a représente en détail une feuille de rang pair, d'un condensateur empilé réalisé selon un des procédés de l'invention,

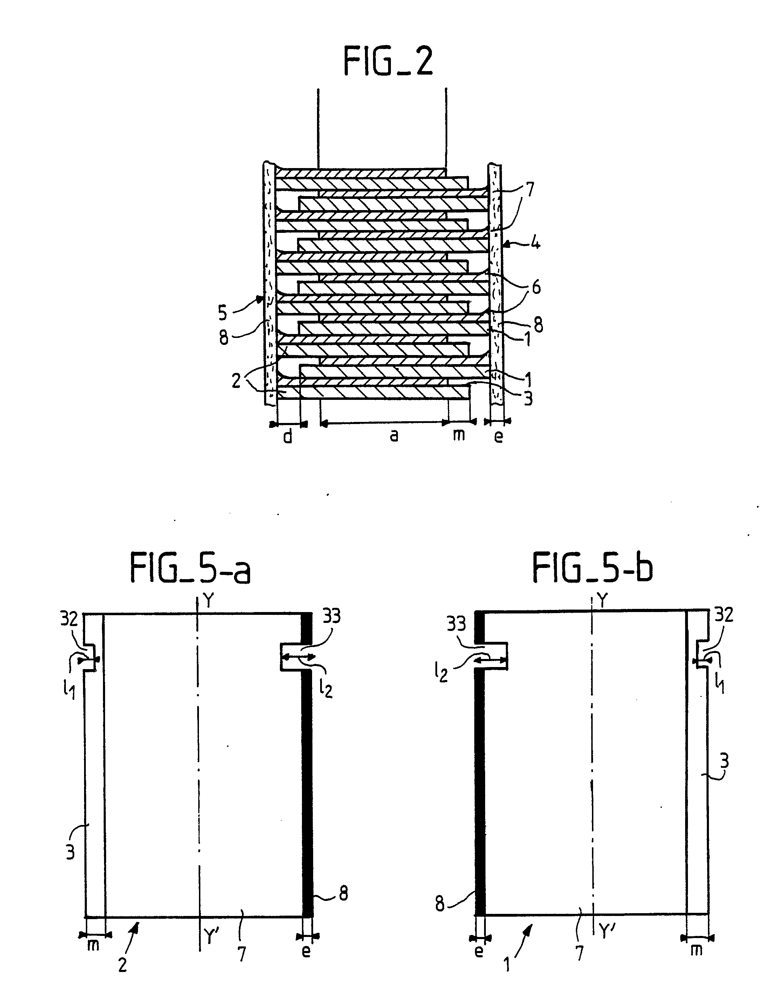

- la figure 5 b représente en détail une feuille de rang impair, d'un condensateur empilé réalisé selon un des procédés de l'invention.

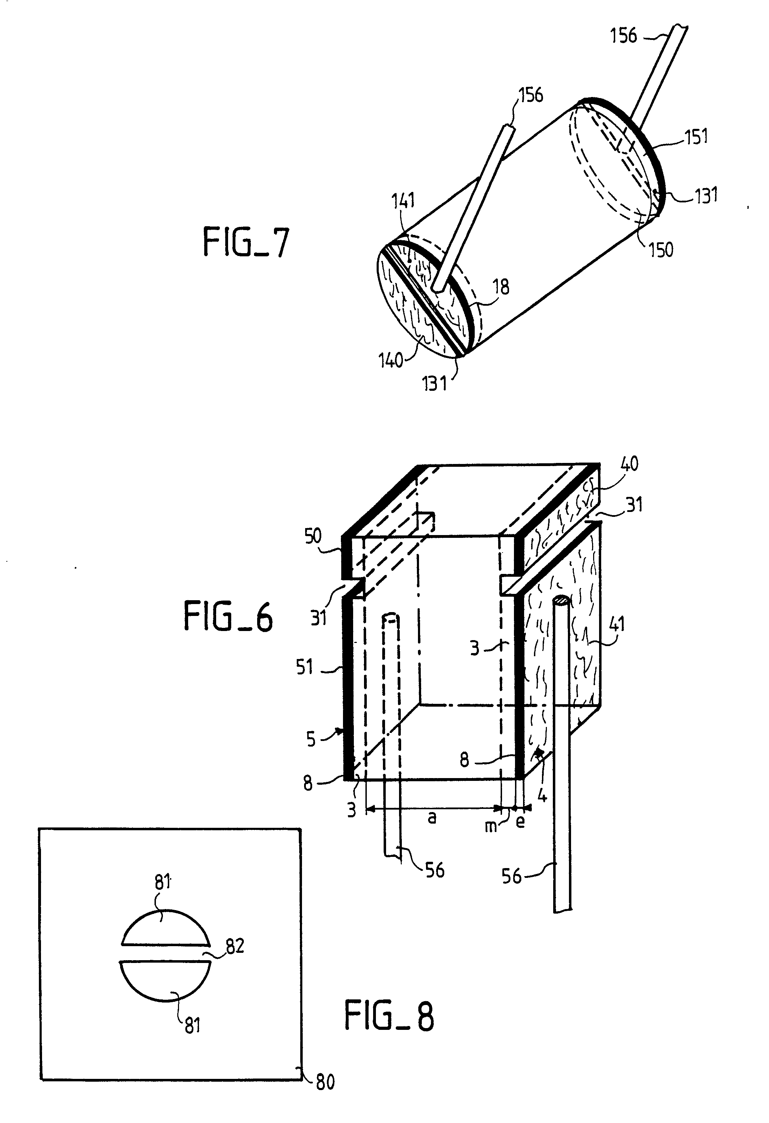

- la figure 6 représente un condensateur empilé fini fabriqué selon un des procédés de l'invention,
- la figure 7 représente un condensateur bobiné fini fabriqué selon un des procédés de l'invention,
- la figure 8 représente un masque utilisé lors de la fabrication de condensateurs bobinés, selon un des procédés de l'invention.

Sur ces figures les mêmes repères désignent les mêmes éléments.

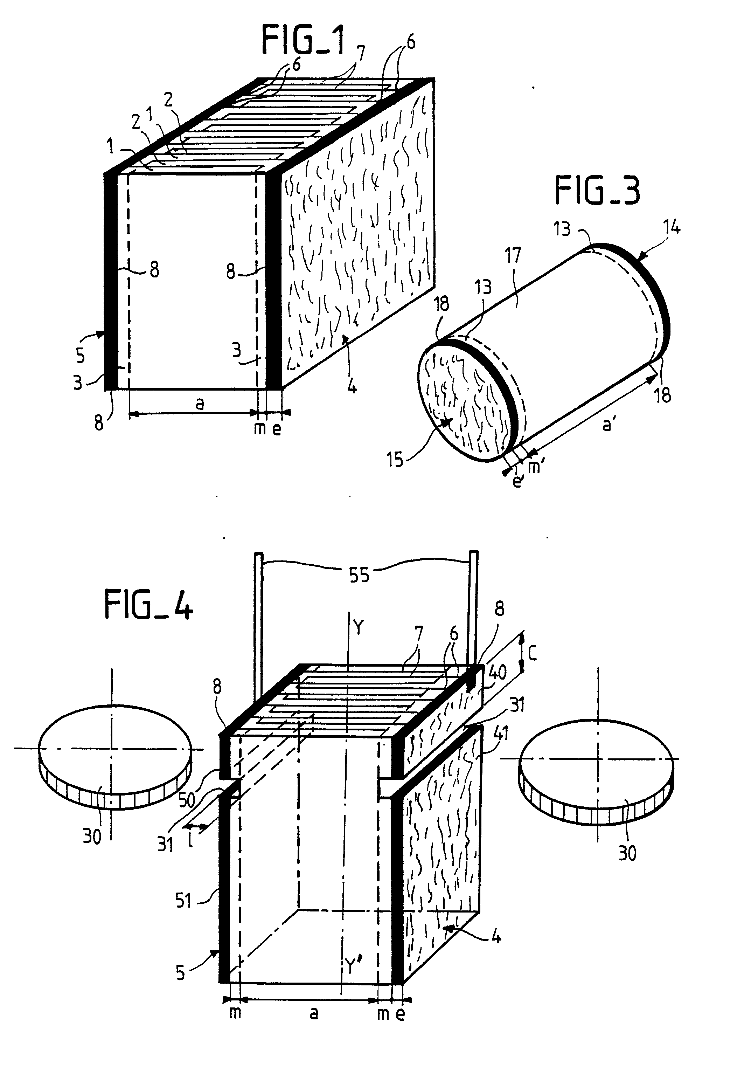

La figure 1 représente un condensateur empilé, semi-fini obtenu après avoir découpé un ruban capacitif en blocs parallélépidiques. Ce ruban capacitif a été réalisé par la technique connue du bobinage sur une roue de grand diamètre. Le bloc représenté est constitué essentiellement d'un empilement d'un nombre pair de feuilles 1,2. Le matériau des feuilles est un film plastique. Chaque feuille 1,2 représentée possède sur une de ses faces, une zone métallisée 7 et une marge 3 latérale, de largeur m, non métallisée. L'autre face n'est pas métallisée. Des condensateurs empilés peuvent aussi être fabriqués avec des films métallisés sur leur deux faces. Les feuilles 1,2 sont empilées de manière alternée c'est à dire que deux feuilles 1,2 successives ont leur marge 3 sur des faces 4,5 latérales opposées du bloc. Les feuilles 1 sont dites de rang impair et les feuilles 2 de rang pair.

Une armature 8 métallique a été déposée sur chacune des faces 4,5 latérales du bloc. Cette opération connue sous la dénomination de schoopage a lieu avant la découpe du ruban capacitif. On projette sous vide, une couche de métal, d'épaisseur e sur les faces latérales du ruban, du côté des marges. Ces armatures permettent de relier électriquement et mécaniquement les zones 7 métallisées de toutes les feuilles 1,2 de même rang. Les repères 6 indiquent la liaison entre une zone 7 métallisée et une armature 8.

La distance a est la largeur active du condensateur. Elle correspond à la partie en regard entre deux zones 7 métallisées successives.

Dans la plus part des cas, les condensateurs empilés ont une structure telle que représentée sur la figure 2. Le bobinage des films métallisés est effectué de manière à ce que deux films successifs soient légèrement décalés latéralement l'un par rapport à l'autre, d'une distance d appelée débord. Ce débord est de l'ordre de quelques dizaines de millimètres. Cette structure de condensateur facilite la liaison 6 entre une zone métallisée 7 et une armature 8 lors du schoopage. Elle évite aussi les risques de court-circuit. Sur les figures 4 et 6, le condensateur empilé représenté ne comporte pas de débord. C'est uniquement dans un but de simplification et de clarté. Deux feuilles successives pourraient être décalées.

La figure 3 représente un condensateur bobiné semi-fini. Il a été obtenu, selon une technique connue, en bobinant sur eux-mêmes, un nombre pair de films plastiques superposés. On obtient un bloc cylindrique dont deux faces latérales 14,15 sont circulaires. Chaque film possède une zone métallisée 17 et une marge latérale 13, de largeur m', non métallisée. Les films utilisés sont superposés de façon alternée, c'est à dire que deux films successifs ont leur marge 13 sur deux faces 14,15 latérales opposées du bloc. Des armatures 18, d'épaisseur e' ont été déposées sur les faces 14,15 latérales du bloc. Elles ont été déposées par schoopage. La distance a' représente la largeur active du condensateur. Les films plastiques ont été bobinés sans décalage latéral. Il pourrait y en avoir un comme on l'a décrit à la figure 2.

Un élément de connexion sera fixé ultérieurement sur chacune des armatures 8 et 18 des condensateurs représentés sur les figures 1,2 et 3.

La figure 4 représente un condensateur empilé tel que décrit à la figure 1, en cours de fabrication, selon un premier procédé conforme à l'invention. On réalise, à l'aide d'un outil tranchant 30 tel qu'une scie circulaire ou une fraise se déplaçant parallèlement aux armatures 8, au moins une entaille 31 dans chacune des armatures 8. Une seule entaille 31 par armature 8 est représentée. Chaque entaille 31 est destinée à diviser chaque armature 8 en deux plots 40,41 et 50,51 juxtaposés. Chaque entaille 31 est par exemple, perpendiculaire aux feuilles 1,2 et traverse de part en part chaque armature 8. Chaque entaille 31, de profondeur l attaque toute l'épaisseur e de l'armature 8. Elle peut déborder dans la marge 3 de largeur $m$ sans toutefois attaquer la largeur active $a$ pour éviter de diminuer la capacité du condensateur. Les deux armatures 8 entaillées sont, de préference, identiques. Deux entailles 31 placées chacune sur une armature 8 sont symétriques par rapport à un axe YY' parallèle aux feuilles 1,2, elles ont la même profondeur I.

Afin de réaliser ces entailles 31 symétriquement il suffit de positionner le bloc, puis d'attaquer simultanément chacune des armatures 8 à l'aide d'un outil 30. On peut ensuite appliquer deux électrodes 55 de contact sur deux plots 40,50 situés chacun sur une armature 8, en vis-à-vis, de préférence. Ces électrodes 55 de contact permettent de traiter électriquement le condensateur. Ce traitement électrique peut bien sûr détériorer, par effet fusible, certaines liaisons 6 entre les zones 7 métallisées et les armatures 8. Mais ces liaisons ne sont détériorées que sur une distance $c$. Cette distance $c$ correspond à la hauteur des plots 40,50 subissant le traitement électrique sévère. Par ce traitement aucune liaison 6 ou aucune feuille 1,2 ne seront endommagées entièrement

Cette distance $c$ peut être gérée automatiquement, de manière à déterminer pour chaque distance un courant maximum à ne pas dépasser pour ne pas fondre de liaison 6.

Après.ce traitement électrique sévère, ou retire les électrodes 55 de contact et l'on peut fixer sur chacun des deux autres plots 41,51 qui n'ont pas subi le traitement électrique, un élément de. connexion. Cet élément n'est pas représenté sur la figure 4.

La figure 5a représente de face, en détail une feuille 2 de rang pair d'un condensateur empilé conforme à l'invention. Deux feuilles successives sont décalées entre elles comme on l'a représenté à la figure 2. La feuille 2 représentée comporte sur sa face visible une zone 7 métallisée et une marge latérale 3 non métallisée. Une couche de métal d'épaisseur $e$ borde le côté opposé à la marge 3. Cette couche fait partie d'une armature 8 réalisée par schoopage. On ne trouve cette partie d'armature 8 que d'un seul côté à cause du décalage entre les feuilles. Cette feuille 2 comporte aussi deux entailles 32,33 situées en vis-à-vis. L'une d'elle 32 est située dans la marge 3. L'autre 33 attaque le métal de l'armature 8.

Ces entailles 32,33 sont de profondeur différente à cause du décalage. L'entaille 32, placée dans la marge 3 aura une profondeur $I_1$ telle que :
$I_1 = x$ avec $x$ inférieur ou égal à $m$
L'entaille 33 placée du côté opposé à la marge 3 aura une profondeur $I_2$ telle que :
$I_2 = x + d + e$

La figure 5b représente une feuille 1 de rang impair. Cette feuille 1 est comparable à la feuille 2 de rang pair, elle est seulement symétrique par rapport à l'axe YY'. L'entaille 32 placée dans la marge 3 a une profondeur $I_1$ telle que :
$I_1 = x$ avec $x$ inférieur ou égal à $m$
L'entaille 33 placée du côté opposé à la marge 3 aura une profondeur $I_2$ telle que :
$I_2 = x + d + e$

La figure 6 représente un condensateur empilé fini conforme à l'invention. Les électrodes de contact ont été retirées des plots 40 et 50. Un élément de connexion 56 a été fixé sur chacun des plots 41,51 n'ayant pas subi le traitement électrique sévère. Ces éléments de connexion 56 sont de préférence parallèles aux faces latérales 4 et 5. Une ou plusieurs opérations d'enrobage peuvent intervenir par la suite.

La figure 7 représente un condensateur bobiné fini conforme à l'invention. Deux plots 140,141 et 150,151 ont été réalisés dans chacune des armatures 18 du condensateur. Ces plots ont pu être obtenus par le procédé décrit plus haut, c'est à dire en effectuant à l'aide d'un outil, au moins une entaille 131 dans chacune des armatures 18. L'entaille 131 représentée s'étend selon un diamètre de l'armature 18. Sur cette figure, on n'a pas représenté de débord dans un souci de simplification.

Comme précédemment l'entaille 131 attaque toute l'épaisseur $e$ de l'armature 18, mais elle peut déborder dans la marge 3, sans toutefois mordre dans la largeur active $a$. Comme décrit précédemment on applique un traitement électrique sévère sur un plot 140,150 de chaque armature 18, ces deux plots 140,150 étant de préférence en vis-à-vis. Ce traitement est appliqué par l'intermédiaire de contacts non représentés. Ils sont en effet retirés à la fin du traitement. On fixe ensuite un élément de connexion 156 sur deux plots 141,151 situés chacun sur une armature 8, de préférence en vis-à-vis. Ces plots 141,151 n'ont pas été dérangés par le courant du traitement électrique sévère. Ces éléments de connexion 156 sont de préférence parallèles aux armatures 18.

Un second procédé de fabrication peut être utilisé pour réaliser un condensateur conforme à l'invention.

Il s'applique plus particulièrement à un condensateur bobiné. Les condensateurs bobinés étant fabriqués individuellement, les plots 140,141,150,151 peuvent être réalisés directement au cours du schoopage des armatures 18. Cette opération étant effectuée par projection de métal sous vide, il suffit de disposer un masque devant chacune des faces latérales du bloc bobiné. Un tel masque 80 est représenté sur la figure 8.

Il possède des évidements 81 correspondant aux zones à métalliser et des parties pleines 82 correspondant aux zones où l'on ne désire pas de métallisation. La forme des évidements 81 sera celle des plots et la forme des parties pleines 82 sera celle des entailles. Lors de la fabrication le bloc bobiné sera mis en place de préférence, entre deux masques 80 identiques, de manière à ce que les armatures soient identiques sur les deux faces latérales du bloc.

Les exemples décrits s'appliquent aux techniques actuellement employées dans l'industrie des condensateurs. L'invention s'applique sans problème pour l'homme de l'art, à d'autres techniques de fabrication de condensateurs bobinés ou empilés. On pourrait utiliser un seul film métallisé. Le film pourrait être métallisé sur ses deux faces. Il pourrait ne pas comporter de marge etc...

## Revendications

1 - Condensateur en couches, de type empilé ou bobiné ayant la forme d'un bloc, réalisé à partir d'au moins un film supportant au moins une métallisation (7), (17) et comportant deux armatures (8), (18) d'épaisseur $\bar{e}$ qui relient électriquement les métallisations (7),(17) caractérisé en ce que chaque armature (8),(18) est constituée d'au moins deux plots (40,41),(50,51), (140,141), (150,151), un des plots (40, 50),(140,150) de chaque armature servant à l'application d'un traitement électrique sévère, en vue de l'autocicatrisation du film.

2 - Condensateur en couches, selon la revendication 1 caractérisé en ce que le film supportant la métallisation (7),(17) comporte une marge (3),(13) latérale non métallisée, les marges (3), (13) de deux couches successives étant disposées sur deux faces latérales (4,5), (14,15) opposées du bloc, les deux faces (4,5),(14,15) étant recouvertes chacune d'une armature (8),(18).

3 - Condensateur en couches selon la revendication 1 caractérisé en ce que le film supporte une métallisation sur chaque face, et comporte une marge latérale non métallisée sur chaque face, les deux marges d'un même film étant sur des côtés opposés.

4 - Condensateur en couches selon l'une des revendications 1 à 3, caractérisé en ce que les plots (40,50),(140,150) servant à application du traitement électrique sévère sont en vis-à-vis.

5 - Procédé de fabrication d'un condensateur en couches selon l'une des revendications 1 à 4, comprenant les étapes de :
   a) bobinage du film
   b) schoopage des armatures (8),(18),
   c) éventuellement découpage en bloc distincts caractérisé en ce que le procédé comprend aussi les étapes de
   d) réalisation d'au moins une entaille (31), (131) sur chaque armature (8),(18) de manière à obtenir les plots (40,41), (50,51), (140,141), (150,151),
   e) application du traitement électrique sévère sur deux plots (40,50), (140,150) situés, chacun sur une armature (8),(18) différente.
   f) fixation d'éléments de connexion (56),(156) sur deux plots (41,51), (141,151) n'ayant pas subi le traitement électrique sévère, ces plots (41,51), (141,151) étant situés, chacun sur une armature (8), (18) différente.

6 - Procédé de fabrication d'un condensateur en couches selon la revendication 5 caractérisé en ce que l'entaille (31),(131) attaque toute l'épaisseur $\bar{e}$ de l'armature (8,18) sans mordre dans la largeur active du condensateur.

7 - Procédé de fabrication d'un condensateur en couches selon l'une des revendications 5 ou 6 caractérisé en ce que les deux armatures (8), (18) entaillées sont identiques.

8 - Procédé de fabrication d'un condensateur en couches selon l'une des revendications 5 à 7 caractérisé en ce que les entailles (31),(131) sont réalisées simultanément sur les deux armatures (8),(18).

9 - Procédé de fabrication d'un condensateur en couches selon l'une des revendications 1 à 4 comprenant l'étape de bobinage du film caractérisé en ce qu'il comprend ensuite les étapes de :
   a) schoopage des armatures (18) à travers un masque (80) comportant au moins une partie pleine (82) et des parties évidées (81) de manière à réaliser les plots (140,141), (150,151),
   b) application du traitement électrique sévère sur deux plots (140,150) situés chacun sur une armature (18) différente,
   c) fixation d'éléments de connexion (156) sur deux plots (141,151) situés chacun sur une armature (18) différente.

10 - Procédé de fabrication d'un condensateur en couches selon la revendication 9 caractérisé en ce que les deux armatures (18) schoopées sont identiques.

11 - Procédé de fabrication d'un condensateur en couches selon l'une des revendications 9 ou 10 caractérisé en ce que l'on schoope les deux armatures (18) en utilisant deux masques (80) identiques.

FIG_1

FIG_3

FIG_4

# FIG_2

# FIG_5-a

# FIG_5-b

FIG_7

FIG_6

FIG_8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 547 105  (FIABLE) <br> * En entier * | 1-3,6-8 ,10,11 | H 01 G   1/147 <br> H 01 G   4/24 |
| A | | 4,5,9 | |
| | --- | | |
| A | GB-A-2 084 799  (MFD CAPACITORS LTD) <br> * En entier * | 1-11 | |
| | --- | | |
| A | FR-A-2 579 366  (LCC-CICE COMPAGNIE EUROPEENNE DE COMPOSANTS ELECTRONIQUES) | | |
| | --- | | |
| A. | EP-A-0 032 738  (MATSUSHITA ELECTRIC INDUSTRIAL CO.) | | |
| | --- | | |
| A | FR-A-1 385 588  (M. FRENKEL) | | |
| | ----- | | |

DOMAINES TECHNIQUES RECHERCHES (Int. Cl.5)

H 01 G

**Le présent rapport a été établi pour toutes les revendications**

| Lieu de la recherche | Date d'achèvement de la recherche | Examinateur |
|---|---|---|
| LA HAYE | 21-03-1990 | MES L.A. |